(19) Europäisches Patentamt
European Patent Office
Office européen des brevets

(11) Publication number: 0 294 767 B1

(12) EUROPEAN PATENT SPECIFICATION

(45) Date of publication of patent specification: 25.08.93

(51) Int. Cl.5: C08F 10/08, C08F 4/64, C08F 2/34

(21) Application number: 88109067.4

(22) Date of filing: 07.06.88

# (54) Process for producing polybutene-1.

(30) Priority: 10.06.87 JP 144359/87
24.12.87 JP 329050/87
24.12.87 JP 329051/87

(43) Date of publication of application:
14.12.88 Bulletin 88/50

(45) Publication of the grant of the patent:
25.08.93 Bulletin 93/34

(84) Designated Contracting States:
BE CH DE FR GB IT LI NL SE

(56) References cited:
EP-A- 0 177 841
EP-A- 0 249 984
DE-A- 1 135 174
FR-A- 1 209 499
US-A- 4 256 866

(73) Proprietor: IDEMITSU PETROCHEMICAL CO. LTD.
1-1, Marunouchi 3-chome Chiyoda-ku
Tokyo 100(JP)

(72) Inventor: Takashi, Yamawaki, c/o Idemitsu Petrochem.Co.Ltd.
1-1, Anegasakikaigan
Ichihara-shi, Chiba-ken(JP)
Inventor: Masahiko, Kondo, c/o Idemitsu Petrochem.Co.Ltd.
1-1, Anegasakikaigan
Ichihara-shi, Chiba-ken(JP)
Inventor: Hideki, Imabayashi, c/o Idemitsu Petrochem.Co.Ltd.
1-1, Anegasakikaigan
Ichihara-shi, Chiba-ken(JP)

(74) Representative: TER MEER - MÜLLER - STEINMEISTER & PARTNER
Mauerkircherstrasse 45
D-81679 München (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

BACKGROUND OF THE INVENTION

(1) Field of the Invention

This invention relates to a process for producing polybutene-1. More particularly, it relates to a process for producing polybutene-1 suitable for molded products such as pipes in the presence of a highly active catalyst, taking advantage of the vapor phase polymerization.

(2) Discription of the Related Art

Hitherto, most proposals for processes for producing highly crystalline polybutene-1 are those by solution polymerization and slurry polymerization using titanium trichloride as a catalyst. On the other hand, if polybutene-1 could be produced by vapor phase polymerization, it is expected that the process can be simplified and besides production cost can be decreased. Thus, some proposals have been made which suggest the possibility of vapor phase polymerization of butene-1. However, there have been various problems in industrial practice of the proposed processes.

For example, polybutene-1 shows a higher affinity to hydrocarbon solvents than polyethylene and polypropylene. Therefore, if only a small amount of solvent is present in the catalyst component fed to the vapor phase polymerization system, the polymer per se is apt to agglomerate. As a result, it becomes difficult to perform stable operation or working of apparatuses for a long time.

When vapor phase polymerization is carried out using the widely used titanium trichloride type catalysts (See Japanese Patent Kokai (Laid-Open) No.60-192716) and magnesium chloride type catalysts (see Japanese Patent Kokai (Laid-Open) No.59-6205), the activity of the catalysts decreases and the stereoregularity of the resulting polybutene-1 is not sufficient. Thus, it is not possible to satisfactorily use the vapor phase polymerization method.

Especially, polybutene-1 obtained by the conventional processes is not sufficient for molding into pipes.

EP-A-0 249 984 which is comprised in the state of the art in the sense of Article 54 (3) EPC discloses a process for producing a butene-1 polymer by homopolymerization of butene-1 or copolymerization of butene-1 with other $\alpha$-olefin in the presence of a catalyst prepared from a solid catalyst component (A) obtained from a magnesium compound, an electron donor and a titanium compound, an organoaluminum compound (B) and an electron donating compound (C), said electron donating compound (C) is at least one compound selected from the group consisting of an organophosphorus compound and a heterocyclic compound (in particular 1,8-cineole).

EP-A-0 177 841 discloses a process for producing olefin polymers in the presence of a catalyst comprising (A) a solid catalyst component containing a magnesium halide, a titanium halide and optionally an electron donor, (B) an organoaluminum compound and (C) an ether compound.

US-A-4 256 866 describes a process for polymerizing $\alpha$-olefins to a normally-solid, substantially crystalline polymer utilizing a catalyst comprising a transition metal halide and an aluminum alkyl, wherein a sterically hindered 5- or 6-membered cyclic ether is added to such a system in minor amounts to decrease the amount of n-hexane soluble polymeric product.

DE-A-1 135 174 describes a process for the polymerization of olefins in the presence of catalysts comprising at least one halide of Ti, Zr, Hf or Ge, at least one component selected from the group consisting of an organic metal halide, a mixture of an organic halide and one metal and a hydride, wherein at least one organic peroxide is added to said catalyst.

FR-A-1 209 499 relates to a process for producing polyethylene wherein peroxide compounds are added to the catalyst system before or during the polymerization.

SUMMARY OF THE INVENTION

The object of this invention is to provide a process for producing polybutene-1 of high stereoregularity by using a highly active catalyst enabling the production of polybutene-1 having a low content of catalyst residues and which is suitable to be molded into articles, such as pipes, under stable operation conditions.

According to the present invention, this object is solved by a process for producing polybutene-1 including a homopolymer of butene-1 and a copolymer of butene-1 with other $\alpha$-olefins by a vapor phase polymerization at a temperature of 45-70 °C in the presence of a catalyst comprising (A) a solid catalyst component obtained from a magnesium compound, an electron donating compound and a halide of

tetravalent titanium, (B) an organoaluminum compound and (C) an electron donor, said electron donor (C) is at least one compound selected from the group consisting of an ether compound represented by the formula:

$R^6{}_nC(OR^7)_{4-n}$

wherein $R^6$ represents a saturated or unsaturated hydrocarbon group with the proviso that at least one of $nR^6$ is an aromatic hydrocarbon group or an alicyclic hydrocarbon group and $R^7$ represents a hydrocarbon group and n is 1-3, and an organic peroxide represented by the formula:

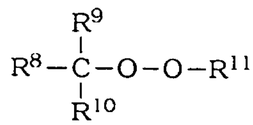

wherein $R^8$, $R^9$, $R^{10}$ and $R^{11}$ each represent a saturated or unsaturated hydrocarbon group, **characterized in that** said solid catalyst component (A) has an average particle size of 5-200 $\mu$m, a geometrical standard deviation ($\sigma$g) of the particle size distribution of less than 2.1 and a molar ratio of said electron donating compound/magnesium of 0.01 or more, and the vapor phase polymerization is carried out at a molar ratio of hydrogen/butene-1 of 0.001-0.1.

DESCRIPTION OF THE PREFERRED EMBODIMENT

According to this invention, a homopolymer of butene-1 or a copolymer of butene-1 with other $\alpha$-olefins are produced under specific vapor phase polymerization conditions in the presence of a catalyst obtained from (A) a specific solid catalyst component obtained from a magnesium compound, an electron donating compound and a halide of tetravalent titanium, (B) an organoaluminum compound and (C) a specific electron donor.

Re: Solid catalyst component (A):

The solid catalyst component (A) is prepared from a magnesium compound, an electron donating compound and a halide of tetravalent titanium.

Said magnesium compound is not critical and there may be used those which are normally used as raw materials for the preparation of highly active catalysts used for stereoregular polymerization of lower $\alpha$-olefins and the preparation of ethylene homopolymers such as straight chain polyethylene and ethylene copolymers.

Such magnesium compounds include, for example, those which are represented by the following formula:

$MgX_2$ (4)

(wherein X represents a halogen atom; a straight chain or branched chain aliphatic, alicyclic or aromatic alkoxy group of 1-10 carbon atoms, a cycloalkoxy group or an arylalkoxy group; an aryloxy group or an alkylaryloxy group; or these alkoxy groups or aryloxy groups which are substituted with a hetero-atom such as a halogen atom; and these X may be identical or different).

The halogen atom as X includes a fluorine atom, chlorine atoms, bromine atom and iodine atom, and chlorine atom is especially preferred.

Typical examples of the magnesium compounds represented by the formula (4) are as follows;

$Mg(-OCH_3)_2$, $Mg(-OC_2H_5)_2$, $Mg(-OC_3H_7)_2$

$Mg(-OC_4H_9)_2$, $Mg(-OC_6H_{13})_2$

$Mg(-OC_8H_{17})_2$,

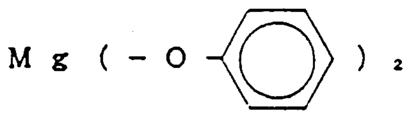

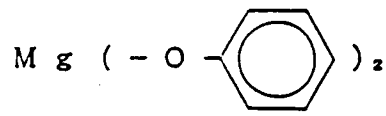

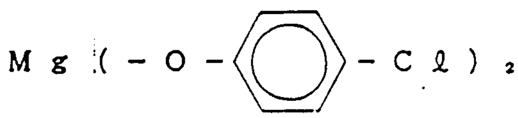

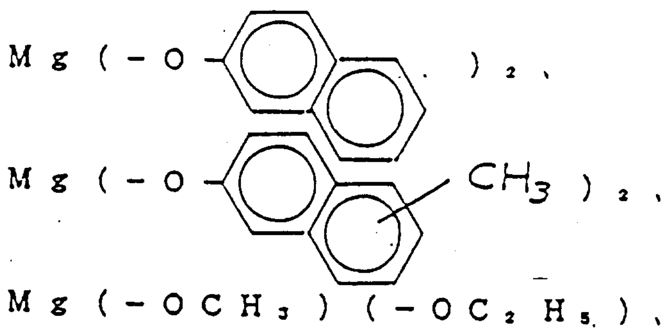

$Mg(-OCH_3)(-OC_2H_5)$,

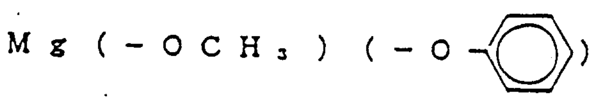

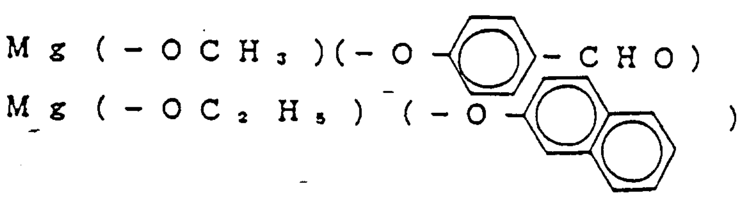

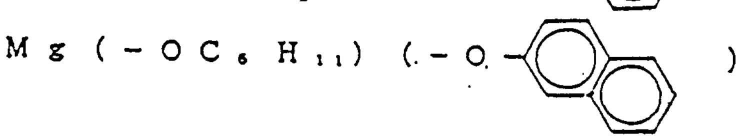

$MgCl_2$, $MgBr_2$, $MgI_2$, $MgCl(OCH_3)$
$MgCl(OC_2H_5)$, $MgCl(OC_3H_7)$, $MgCl(OC_4H_9)$

These magnesium compounds may be used alone or in combination of two or more.

Of these magnesium compounds, preferred are magnesium chloride and lower alkoxy magnesium compounds, and $MgC\ell_2$, $Mg(OCH_3)$ and $Mg(OC_2H_5)_2$ are especially preferred.

As the electron donating compound which is a starting material for the solid catalyst component (A), there may be used organic compounds containing oxygen, nitrogen, phosphorus or sulfur.

As examples of the electron donating compounds, mention may be made of amines, amides, ketones, nitriles, phosphines, phosphoramides, esters, ethers, thioethers, thioesters, acid anhydrides, acid halides, acid amides, aldehydes and organic acids.

More specific examples are as follows: organic acids, e.g., aromatic carboxylic acids such as benzoic acid and p-oxybenzoic acid; acid anhydrides such as succinic anhydride, benzoic anhydride and p-toluylic anhydride; ketones of 3-15 carbon atoms such as acetone, methyl ethyl ketone, methyl isobutyl ketone, acetophenone, benzophenone and benzoquinone; aldehydes of 2-15 carbon atoms such as acetaldehyde, propionaldehyde, octylaldehyde, benzaldehyde, tolualdehyde and naphthaldehyde; monoesters such as methyl formate, methyl acetate, ethyl acetate, vinyl acetate, propyl acetate, octyl acetate, cyclohexyl acetate, ethyl propionate, ethyl butyrate, ethyl valerate, methyl chloroacetate, ethyl dichloroacetate, methyl methacrylate, ethyl crotonate, ethyl pivalate, dimethyl maleate, ethyl cyclohexanecarboxylate, methyl benzoate, ethyl benzoate, propyl benzoate, butyl benzoate, octyl benzoate, cyclohexyl benzoate, phenyl benzoate, benzyl benzoate, methyl toluylate, ethyl toluylate, amyl toluylate, ethyl ethylbenzoate, methyl anisate, ethyl anisate, ethyl ethoxybenzoate, ethyl p-butoxybenzoate, ethyl o-chlorobenzoate and ethyl naphthoate, aromatic diesters such as dimethyl phthalate, diethyl phthalate, dipropyl phthalate, diisopropyl phthalate, diisobutyl phthalate, methylethyl phthalate, methylpropyl phthalate, methylisobutyl phthalate, ethylpropyl phthalate, ethylisobutyl phthalate, propylisobutyl phthalate, dimethyl terephthalate, diethyl terephthalate, dipropyl terephthalate, diisopropyl terephthalate, diisobutyl terephthalate, methylethyl terephthalate, methylpropyl terephthalate, methylisobutyl terephthalate, ethylpropyl terephthalate, ethylisobutyl terephthalate, propylisobutyl terephthalate, dimethyl isophthalate, diethyl isophthalate, dipropyl isophthalate, diisopropyl isophthalate, diisobutyl isophthalate, methylethyl isophthalate, methylpropyl isophthalate, methylisobutyl isophthalate, ethylpropyl isophthalate, ethylisobutyl isophthalate and propylisobutyl isophthalate and esters of 2-18 carbon atoms such as $\gamma$-butyrolactone, $\delta$-valerolactone, coumarin, phthalide and ethylene carbonate; acid halides of 2-15 carbon atoms such as acetyl chloride, benzyl chloride, toluylic acid chloride and anisic acid chloride; ethers of 2-20 carbon atoms such as methyl ether, ethyl ether, isopropyl ether, n-butyl ether, amyl ether, tetrahydrofuran, anisole, diphenyl ether and ethylene glycol butyl ether; acid amides such as acetic amide, benzoic amide and toluylic amide; amines such as tributylamine, N,N'-dimethylpiperazine, tribenzylamine, aniline, pyridine, picoline and tetramethylethylenediamine; and nitriles such as acetonitrile, benzonitrile and tolunitrile.

Among these compounds, preferred are esters, ethers, ketones and acid anhydrides. Especially preferred are alkyl esters of aromatic carboxylic acids, for example, alkyl esters of 1-4 carbon atoms such as methyl benzoate, methyl p-methoxybenzoate, ethyl p-ethoxybenzoate and propyl toluylate and aromatic diesters such as diisobutyl phthalate, di-n-butyl phthalate and diisopropyl phthalate. Further, aromatic ketones such as benzoquinone, aromatic carboxylic acid anhydrides such as benzoic acid anhydride and ethylene glycol alkyl ethers such as ethylene glycol butyl ether are also preferred. These may be used alone or in combination of two or more.

Specific examples of the halide of tetravalent titanium which is one of starting materials for solid catalyst component (A) are titanium tetrahalides such as $TiCl_4$, $TiBr_4$ and $TiI_4$; alkoxytitanium trihalides such as $Ti(OCH_3)Cl_3$, $Ti(OC_2H_5)Cl_3$, $(n\text{-}C_4H_9O)TiCl_3$ and $Ti(OC_2H_5)Br_3$; alkoxytitanium dihalides such as $Ti(OCH_3)_2Cl_2$, $Ti(OC_2H_5)_2Cl_2$, $(n\text{-}C_4H_9O)_2TiCl_2$ and $Ti(OC_3H_7)_2Cl_2$; and trialkoxytitanium monohalides such as $Ti(OCH_3)_3Cl$, $Ti(OC_2H_5)_3Cl$, $(n\text{-}C_4H_9O)_3TiCl$ and $Ti(OCH_3)_3Br$. These may be used alone or in combination of two or more.

Among them, halides of high halogen content are preferred and titanium tetrachloride is especially preferred.

The preparation of the solid catalyst component (A) can be performed, for example, by allowing the magnesium compounds, the electron donating compound and the halide of tetravalent titanium to contact with each other simultaneously or stepwise in a hydrocarbon solvent.

Furthermore, processes disclosed in Japanese Patent Kokai (Laid-Open) Nos.56-166205, 57-63309, 57-190004, 57-300407 and 58-47003 and Japanese Patent Application No. 61-43670 can also be employed as suitable processes for the preparation of the solid catalyst component (A) used in this invention.

It is also possible to prepare the solid catalyst component by contacting the electron donating compound, the halide of tetravalent titanium and a solid comprising an oxide of an element belonging to Groups II-IV of the periodic table such as silicon oxide, magnesium oxide or aluminum oxide, preferably silicon oxide or a composite oxide containing at least one oxide of an element belonging to Groups II-IV of

the periodic table on which said magnesium compound is supported, in a solvent at 0-200 °C, preferably 10-150 °C for 2 minutes - 24 hours (See Japanese Patent Application No.61-43670).

Further, the solid catalyst component (A) can also be prepared by contacting the magnesium compound with the electron donating compound, and then reacting the magnesium compound after being contacted with the electron donating compound with the halide of tetravalent titanium twice or more (See Japanese Patent Kokai (Laid-open) No.57-63309).

As the solvents used for the preparation of the solid catalyst component, there may be used organic solvents which are inert for the magnesium compound, the electron donating compound and the halide of tetravalent titanium, for example, aliphatic hydrocarbons such as hexane and heptane, aromatic hydrocarbons such as benzene and toluene and halogenated hydrocarbons such as mono and polyhalides of saturated or unsaturated aliphatic, alicyclic and aromatic hydrocarbons of 1-12 carbon atoms.

Although the solid catalyst component (A) can be prepared by conventional processes, it is important for this invention that the solid catalyst component has an average particle size of 5-200 µm and a geometrical standard deviation $\sigma g$ of the particle size distribution of less than 2.1, preferably 1.95 or less.

The measurement of the particle size distribution of the solid catalyst component here is performed by the light transmission method. The specific procedure of this measurement is as follows: That is, the catalyst component is diluted to about 0.01-0.5% with an inert solvent such as decalin and is charged in a measuring cell. The cell is irradiated with thin light and the intensity of light which is transmitted through the liquid in the cell at a certain settling state of particles is continuously measured and the particle distribution is measured therefrom. Based on the thus obtained particle size distribution, the standard deviation $\sigma g$ is obtained from the logarithmico-normal distribution function. The average particle size of the catalyst is shown by weight average particle size and the measurement of the particle size distribution is calculated by carrying out sifting within the range of 10-20% of weight average particle size.

When this average particle size is less than 5 µm, there occur agglomeration of the resulting polymer and troubles due to the introduction of particles into the evacuation system of the polymerization tank. On the other hand, when the average particle size exceeds 200 µm the fluidization state of the fluidization layer in the vapor phase polymerization becomes inferior, resulting in sticking to the wall and agglomeration of the polymer.

When the geometrical standard deviation $\sigma g$ is not less than 2.1, the fluidization state of the fluidization layer in the vapor phase polymerization is inferior, resulting in sticking to the wall or agglomeration of the polymer, even if the average particle size is within the range of 5-200 µm.

The solid catalyst component (A) is preferably in relatively regular form such as spherical, oblong spherical or flaky form.

In order to obtain the solid catalyst component (A) having the specific average particle size and geometrical standard deviation, it is preferred to previously prepare a magnesium compound in the above mentioned form having an average particle size within the range of 5-200 µm and a geometrical standard deviation $\sigma g$ of the particle size of less than 2.1, preferably 1.95 or less and suspend this magnesium compound in an excess amount of liquid titanium compound or solution of titanium compound in hydrocarbon to carry the titanium compound thereon.

Alternatively, a catalyst particle of narrow particle size distribution which satisfies the above range of average particle size may be prepared by selecting the reaction conditions of the titanium compound, the electron donating compound and the magnesium compound. The reaction conditions include the amount of the compounds, temperature, contacting time and the like.

The solid catalyst component (A) used in this invention desirably has a ratio of halogen/titanium (molar ratio) of 6-200, preferably 7-100 and a ratio of magnesium/titanium (molar ratio) of 1-90, preferably 5-70, and it is important that the ratio of electron donating compound/magnesium (molar ratio) is 0.01 or higher, preferably 0.03-1.

When these ratios are outside the above ranges, the catalyst activity and the stereoregularity are sometimes insufficient.

Re: Organoaluminum compound (B):

The organoaluminum compound (B) is not critical and widely used are those which are represented by the formula:

$AlR^6_v X_{3-v}$ or $Al_2 R^6_3 X_3$ -

(wherein $R^6$ represents an alkyl group of 1-10 carbon atoms, a cycloalkyl group or an aryl group, v

represents a real number of 1-3 and X represents a halogen atom such as chlorine and bromine).

As examples of the organoaluminum compounds, mention may be made of trialkylaluminums such as trimethylaluminum, triethylaluminum, triisopropylaluminum,triisobutylaluminum and trioctylaluminum, dialkylaluminum monohalides such as diethylaluminum monochloride, diisopropylaluminum monochloride, diisobutylaluminum monochloride and dioctylaluminum monochloride and alkylaluminum sesquihalides such as ethylaluminum sesquichloride. Among them, trialkylaluminum is preferable and triisobutylaluminum is especially preferable.

These compounds may be used alone or in combination of two or more.

Re: Electron donor (C):

The electron donor (C) is at least one compound selected from the group consisting of an ether compound represented by the following formula:

$R^6_n C(OR^7)_{4-n}$ (2)

(wherein $R^6$ represents a saturated or unsaturated hydrocarbon group and at least one of $nR^6$ is an aromatic hydrocarbon group or alicyclic hydrocarbon group, $R^7$ represents a hydrocarbon group and n is 1-3) and
an organic peroxide represented by the following formula:

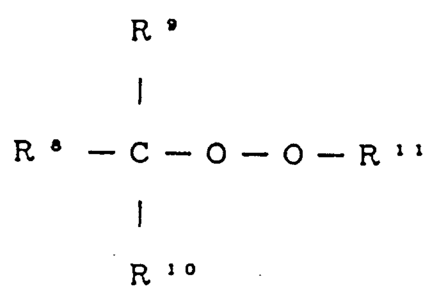

(3)

(wherein $R^8$, $R^9$, $R^{10}$ and $R^{11}$ each represents a saturated or unsaturated hydrocarbon group).

If compounds other than the specific compounds represented by the above formulas (2) and (3), for example, silane compounds and aromatic esters are used as electron donor (C), the resulting polymers are not improved in their stereoregularity and are not suitable for molded articles such as pipes. Moreover, under the conditions of low molar ratio of hydrogen/butene, the moldabilty sharply decreases and the amount of residual halogen in the polymer increases to cause corrosion of molding machines.

Examples of the ether compounds represented by the above formula are α-cumylmethyl ether, 1,1-diphenylethylethyl ether, diphenyldimethoxymethane, diphenyldiethoxymethane,phenyltrimethoxymethane, dicyclohexyldimethoxymethane, phenyltriethoxymethane, pentylphenyl ether and benzylethyl ether.

These ether compounds may be used alone or in combination of two or more.

Among these ether compounds, preferred is diphenyldimethoxymethane.

Examples of the organic peroxides represented by the above formula are dicumyl peroxide, bis(1,1-diphenylethyl)peroxide, di-tert-butyl peroxide, tert-butylcumyl peroxide, di-tert-heptyl peroxide, tert-heptylcumyl peroxide, di-tert-decyl peroxide and tert-decylcumyl peroxide.

These organic peroxides may be used alone or in combination of two or more.

Among these organic peroxides, preferred is dicumyl peroxide.

Re: Polymerization catalyst:

The process of this invention comprises polymerizing, under vapor phase polymerization conditions, butene-1 or butene-1 with other α-olefins in the presence of a catalyst having the solid catalyst component (A), the organoaluminum compound (B) and the specific electron donor (C).

With reference to the composition of the catalyst, desirably the content of the organoaluminum compound (B) is 0.1-1000 times, preferably 1-500 times the mol or the halide of tetravalent titanium in the solid catalyst component (A) and the content of the electron donor (C) is 0.1-500 times, preferably 0.5-200 times the mol of titanium atom in the halide of the tetravalent titanium in the solid catalyst component (A).

For vapor phase polymerization conditions, the polymerization temperature is preferably 50-65 °C.

When the polymerization temperature is lower than 45 °C, the partial pressure of butene-1 cannot be so high because liquefaction must be prevented and hence sometimes the polymerization rate cannot be sufficiently high and thus the removal of polymerization heat may become difficult in the industrial production. When the polymerization temperature is higher than 70 °C, sometimes the resulting polymer particles agglomerate or stick to the wall making the polymerization operation difficult. Furthermore, sometimes the catalyst activity decreases and smooth polymerization becomes impossible.

The partial pressure of butene-1 which may vary depending on the polymerization temperature may be within the range at which substantially no liquefaction occurs and ordinarily is about $9.8 \times 10^4$ - $1.47 \times 10^6$ Pa (about 1-15 kg/cm$^2$).

One of the important points in this invention is to carry out the vapor phase polymerization at a molar ratio of hydrogen/butene-1 within the range of 0.001-0.1. If the molar ratio is outside this range, the catalyst activity decreases or the amount of residual halogen in the resulting polymer increases. Besides, the control of the molecular weight of the polymer sometimes becomes difficult.

In the process of this invention, the molecular weight of the polymer can be adjusted to a suitable range using hydrogen, but molecular weight adjusting agents other than hydrogen may also be used.

Moreover, an inert gas having a lower boiling point than butene-1, such as nitrogen, methane, ethane or propane may also be present. The presence of such an inert gas in a further decrease of agglomeration of the polymer particles and besides makes it easy to remove polymerization heat. An effective amount of the inert gas is at least 0.2 time the mol of butene-1.

The vapor phase polymerization can be carried out using a fluidized bed or an agitation fluidized bed. Further, it can also be carried out by passing the gas components through a tubular polymerizer.

According to the process of this invention, homopolymers of butene-1 or random or block copolymers of butene-1 with other α-olefins can be produced.

Homopolymers can be produced by feeding only butene-1 as monomer to the polymerizer together with hydrogen and the like and polymerizing it by the conventional method.

Random copolymers can be produced by feeding to the polymerizer butene-1 and other α-olefins as monomers so that the content of butene-1 in the copolymer is 60-99.5 mol%, preferably 70-98 mol%, together with hydrogen and the like and copolymerizing them.

So-called block copolymers can be produced by first stage polymerization which comprises homopolymerization of an α-olefin other than butene-1, and second stage polymerization which comprises copolymerization of butene-1 or butene-1 with other α-olefins.

As the α-olefins other than butene-1, there may be used, for example, straight chain monoolefins such as propylene, ethylene, hexene-1 and octene-1 and branched chain monoolefins such as 4-methyl-pentene-1.

Ethylene and propylene are preferred as other olefins for obtaining polybutene-1 of desirable properties.

By employing the vapor phase polymerization method, a step for recovery of the polymerization solvent can be omitted and the step for drying the resulting polymers can be considerably simplified.

After-treatments after completion of the polymerization can be carried out by conventional methods. That is, after the vapor phase polymerization, a nitrogen stream may be passed through the polymer powder discharged from the polymerizer to remove olefins and the like contained therein. Further, if necessary, the polymer powder may be pelletized by an extruder and in this case there may be added a small amount of water and alcohol to completely deactivate the catalyst.

Polybutene-1 thus obtained by the process of this invention normally has an intrinsic viscosity [$\eta$] (decalin solution at 135 °C) of 2.0-7.0 dl/g and an I.I. (insoluble matter after Soxhlet extraction with boiling diethyl ether for 6 hours) of at least 95% and a bulk density of at least 0.28 g/cm$^3$. The content of catalyst residue in the resulting polymer is more sharply decreased.

As a result, polybutene-1 obtained by the process of this invention can be used as materials suitable for pipes and the like.

In summary, the invention has the following advantages.

(1) The catalyst activity is markedly high and the amount of catalyst residue in the polymer product can be reduced. Therefore, a step for removal of catalyst residue from the resulting polybutene-1 can be omitted. Besides, there are substantially no harmful residues and the problem of corrosion of molding machine can be solved.

(2) Polymer powder of high bulk density can be obtained and so this is convenient for transportation.

(3) Since the product polymer has a [$\eta$] of 2.0-7.0 dl/g and is superior in stereoregularity (I.I.) and creep resistance, it can be suitably used for making pipes.

This invention will be explained in more detail in the following examples and comparative examples.

Reference Example 1

(1) Preparation of solid catalyst component:

In a sufficiently dried 10 liter four necked flask were charged 5 liters of dehydrated and purified n-hexane, 500 g (4.4 mols) of magnesium diethoxide and 153 g (0.55 mol) of n-butyl phthalate and reaction was allowed to proceed for 1 hour under reflux. Then, at 90 °C, thereto was added dropwise 2.5 kg (132 mols) of titanium tetrachloride over a period of 50 minutes and reaction was further allowed to proceed for 2 hours at 90 °C. Thereafter, the temperature was lowered to 30 °C and supernatant liquid was drawn. 7 liters of n-heptane was added to the residue, followed by stirring. Then, it was left to stand and supernatant liquid was drawn. This procedure was repeated twice. Thereafter, 5 liters of n-heptane was added and 2.5 kg (132 mols) of titanium tetrachloride was added dropwise at 70 °C and reaction was allowed to proceed at 90 °C for 2 hours. Then, the temperature was lowered to 80 °C and supernatant liquid was drawn and the residue was washed with addition of 7 liters of n-heptane. The washing was repeated until chloride ion was not detected to obtain a solid catalyst component. The average particle size of this solid catalyst component was 35 $\mu$m and the geometrical standard deviation ($\sigma$g) of the particle size distribution was 1.3. The amount of titanium carried thereon was measured by colorimetry to find that 2.6% by weight of titanium was contained.

(2) Preparation of catalyst:

The solid catalyst component obtained in the above (1) was diluted to 2 mmols Ti/liter and introduced into a catalyst preparation tank. To this catalyst preparation tank were fed 30 mmols/liter of triisobutylaluminum and 12 mmols/liter of 1,8-cineole. Then, propylene was fed thereto in an amount of 50 g per 1 mmol of titanium. The temperature in the catalyst preparation tank was elevated to 40 °C and reaction for the preparation of the catalyst was effected.

(3) Production of butene-1 homopolymer:

A fluidized type polymerizer of 300 mm in diameter and 100 liters in capacity was used. A Ti catalyst slurry re-prepared in an amount of 3.6 mmols/liter in terms of Ti atom from the catalyst obtained in the above (2) was fed from the above catalyst preparation tank to said polymerizer at a flow rate of 0.15 liter/hr with 60 mmols/hr of triisobutylaluminum and 24 mmols/hr of 1,8-cineole.

The partial pressure of butene-1 and that of nitrogen were adjusted to $2.94 \times 10^5$ Pa (3 kg/cm$^2$) and $3.92 \times 10^5$ Pa (4 kg/cm$^2$), respectively and butene-1, $N_2$ gas and $H_2$ gas were fed at a gas superficial velocity of 35 cm/sec. Discharging of the polymer was adjusted so that the amount of polymer in the polymerizer became constant.

Polymerization temperature was 55 °C.

Intrinsic viscosity [$\eta$], I.I., bulk density, residual titanium (analysis: fluorescent X-ray method), residual chlorine (analysis: fluorescent X-ray method) and creep resistance (according to ASTM D 2990) of the resulting polymer are shown in Table 1.

Comparative Example 1

Reference Example 1 was repeated except that 3.8 mmols/liter of methyl toluylate was used in place of 1,8-cineole in (2) of Reference Example 1 and 7.5 mmols/hr of methyl toluylate was fed in place of 1,8-cineole in (3) of Reference Example 1.

The results are shown in Table 1.

Comparative Example 2

Reference Example 1 was repeated except that 1 mmol/liter of diphenyldimethoxysilane was used in place of 1,8-cineole in (2) of Reference Example 1 and diphenyldimethoxysilane was fed at 3 mmols/hr in place of 1,8-cineole in (3).

The results are shown in Table 1.

Comparative Examples 3 and 4

Reference Example 1 was repeated except that $H_2$/butene-1 (molar ratio) as shown in Table 1 was used.

The results are shown in Table 1.

Comparative Example 5

Reference Example 1 was repeated except that amount of di-n-butyl phthalate was changed from 153 g (0.55 mol) to 7.6 g (0.028 mol) in (1) of Reference Example 1. The solid catalyst component contained 3.0% by weight of titanium.

The results are shown in Table 1.

Reference Example 2

(1) Preparation of solid catalyst component:

86.8 g of anhydrous $MgCl_2$, 33.2 g of diisobutyl phthalate and 13.9 g of vinyltriethoxysilane were introduced into an oscillating mill of 1 liter in internal space and coground for 60 hours in nitrogen atmosphere.

25 g of the coground product was transferred into a reactor of 500 $cm^3$ in nitrogen atomosphere and was allowed to contact with 210 $cm^3$ of $TiCl_4$.

The treatment with $TiCl_4$ was effected at 80 °C for 2 hours with stirring at 100 rpm and then excess $TiCl_4$ and products dissolved therein were removed by a siphon at 80 °C.

Thereafter, the product was washed five times with ethane of 65 °C in an amount of 200 $cm^3$ per one washing.

(2) Preparation of catalyst:

The precedure of Reference Example 1 (2) was used except that the conditions as shown in Table 2 were employed.

(3) Production of butene-1 homopolymer:

Procedure of Reference Example 1 (3) was used except that the conditions as shown in Table 2 were employed.

The results are shown in Table 1.

Reference Example 3

(1) Preparation of solid catalyst component:

In a 5 liter glass container purged with argon were charged 500 g of calcined silicon oxide (manufactured by Fuji Davidson Co.; grade: 952, specific surface area: 350 $m^2$/g, average particle size: 54-65 $\mu$m) and 1.5 liter of trimethylchlorosilane and reaction was allowed to proceed for 12 hours with stirring under reflux and subjected to decantation with n-heptane five times and then dried.

To 500 g of the resulting solid was added 2.5 liter of n-heptane solution containing diethoxymagnesium (2500 mmols) and tetra-n-butoxytitanium (1500 mmols) to allow them to contact with each other for 1 hour at room temperature. Thereafter, 1250 ml of isopropanol was added thereto dropwise, followed by stirring at 80 °C for 1 hour. Thereafter, decantation with 5 liters of n-heptane was repeated 3 times, followed by drying under reduced pressure at 80 °C for 1 hour to obtain a white catalyst carrier. This catalyst carrier contained 3.3% by weight of magnesium atom.

375 Grams of the thus obtained catalyst carrier was placed in a 5 liter glass container, in which were further charged 2.5 liters of n-heptane, 95 mmols of diisopropyl phthalate and 2250 g of titanium tetrachloride. The mixture was stirred at 90 °C for 2 hours. Then, the supernatant liquid was removed by decantation and the resulting solid portion was well washed with hot n-heptane to obtain a solid catalyst component. This catalyst contained 3.2% by weight of Ti.

(2) Preparation of catalyst:

Catalyst was prepared in the same manner as in Reference Example 1 (2) except that the conditions as shown in Table 2 were employed.

(3) Production of butene-1 homopolymer:

The polymer was produced in the same manner as in Reference Example 1 (3) except that the conditions as shown in Table 2 were employed.

The results are shown in Table 2.

Table 1

| | | Reference Example | Comparative Example | | | | |
|---|---|---|---|---|---|---|---|
| | | 1 | 1 | 2 | 3 | 4 | 5 |
| Magnesium compound | kind | $Mg(OC_2H_5)_2$ | $Mg(OC_2H_5)_2$ | $Mg(OC_2H_5)_2$ | $Mg(OC_2H_5)_2$ | $Mg(OC_2H_5)_2$ | $Mg(OC_2H_5)_2$ |
| | Average particle size μm | 35 | 35 | 35 | 35 | 35 | 35 |
| | δ g | 1.3 | 1.3 | 1.3 | 1.3 | 1.3 | 2.2 |
| Cℓ/Ti (molor ratio) | | 24 | 24 | 24 | 24 | 24 | 26 |
| Electron donating compound (ED) | | di-n-butyl phthalate | di-n-butyl phthalate | di-n-butyl phthalate | di-n-butyl phthalate | di-n-butyl phthalate | di-n-butyl phthalate |
| ED/Mg (molor ratio) | | 0.11 | 0.11 | 0.11 | 0.11 | 0.11 | 0.005 |
| Electron donor | | 1,8-cineole | methyl toluylate | diphenyl dimethyl silane | 1,8-cineole | 1,8-cineole | 1,8-cineole |
| Polymerization temperature (°C) | | 55 | 55 | 55 | 55 | 55 | 55 |
| $H_2$/butene-1 (molar ratio) | | 0.005 | 0.05 | 0.005 | 0 | 3 | 0.03 |
| Propylene/butene-1 (molar ratio) | | — | — | — | — | — | — |
| Activity (kg PB/g-Ti) | | 180 | 28 | 26 | 60 | 80 | 35 |
| Intrinsic viscosity [η] | | 5.2 | 2.2 | 4.8 | 6.1 | 0.3 | 3.5 |
| I. I (%) | | 97 | 93 | 88 | 95 | 84 | 88 |
| Bulk density ($g/cm^3$) | | 0.36 | 0.34 | 0.27 | 0.34 | 0.36 | 0.29 |
| Residual Ti (ppm) | | 6 | 36 | 38 | 17 | 13 | 30 |
| Residual Cℓ (ppm) | | 100 | 610 | 650 | 280 | 220 | 500 |
| Creep resistance | | 5000 | 1200 | 1100 | 5000 < | 100 > | 700 |

Table 2

| | | Reference Example 2 | Reference Example 3 |
|---|---|---|---|
| Magnesium compound | kind | $MgCl_2$ | Silica $Mg(OEt)_2$ |
| | Average particle size µm | 20 | 40 |
| | δg | 1.8 | 1.1 |
| Cl/Ti (molor ratio) | | 22 | 8.1 |
| Electron donating compound (ED) | | diisobutyl phthalate | diisopropyl phthalate |
| ED/Mg (molor ratio) | | 0.09 | 0.1 |
| Electron donor | | 1,8-cineole | 1,8-cineole |
| Porimerization temperature (°C) | | 55 | 55 |
| $H_2$/butene-1 (molar ratio) | | 0.01 | 0.03 |
| Propylene/butene-1 (molar ratio) | | — | — |
| Activity (kg PB/g-Ti) | | 160 | 120 |
| Intrinsic viscosity [η] | | 4.6 | 3.6 |
| I.I (%) | | 96 | 98 |
| Bulk density ($g/cm^3$) | | 0.35 | 0.37 |
| Residual Ti (ppm) | | 6 | 8 |
| Residual Cl (ppm) | | 100 | 50 |
| Creep resistance | | 4400 | 4000 |

Example 1

(1) Preparation of solid catalyst component:

The same solid catalyst component as in Reference Example 1 was obtained in the same manner as in Reference Example 1 (1) except that 5 liters of n-hexane was used in place of 5 liters of n-heptane.

(2) Preparation of catalyst:

A catalyst was obtained in the same manner as in Reference Example 1 except that 3 mmols/liter of diphenyldimethoxymethane was used in place of 12 mmols/liter of 1,8-cineole.

(3) Production of butene-1 homopolymer:

Into a fluidized bed type polymerizer of 300 mm in diameter and 100 liters in capacity were fed the catalyst obtained in the above (2) at a feeding rate of 0.3 mmol/hr in terms of Ti atom from the catalyst storage tank and triisobutylaluminum at a flow rate of 60 mmols/hr and diphenyldimethoxymethane at a flow rate of 6 mmols/hr.

The partial pressure of butene-1, that of nitrogen, the gas superficial velocity of butene-1, $N_2$ gas and $H_2$ gas and discharging of the polymer were under the same conditions as in Reference Example 1.

The intrinsic viscosity [η], I.I., bulk density, residual titanium (fluorescent X-ray method), residual chlorine (fluorescent X-ray method) and creep resistance (according to ASTM D2990) of the resulting polymer are shown in Table 3.

Examples 2 and 3

Example 1 was repeated except that $H_2$/butene-1 (molar ratio) was changed to those as shown in Table 3.

The results are shown in Table 3.

Comparative Example 6

Example 1 was repeated except that 3.8 mmols/liter of methyl toluylate was used in place of diphenyldimethoxymethane in (2) and methyl toluylate was fed at a flow rate of 7.5 mmols/liter in place of diphenyldimethoxymethane in (3).

The results are shown in Table 3.

Comparative Example 7

Example 1 was repeated except that 1 mmol/liter of diphenyldimethoxysilane was used in place of diphenyldimethoxymethane in (2) and diphenyldimethoxysilane was fed at a flow rate of 3 mmols/hr in place of diphenyldimethoxymethane in (3).

The results are shown in Table 3.

Comparative Exampes 8 and 9

Example 1 was repeated except that $H_2$/butene-1 (molar ratio) was changed to those as shown in Table 3.

The results are shown in Table 3.

Comparative Example 10

Example 1 was repeated except that the addition amount of di-n-butyl phthalate was changed to 7.6 g (0.028 mol) from 153 g (0.55 mol). The solid catalyst component contained 3.0% by weight of titanium.

The results are shown in Table 3.

Example 4

Example 1 was repeated except that a butene-1/propylene copolymer was produced by feeding butene-1, propylene, $N_2$ gas and $H_2$ gas at the rates as shown in Table 3.

The results are shown in Table 3.

Example 5

Reference Example 2 was repeated except that the catalyst was prepared under the conditions as shown in Table 4 and butene-1 was polymerized under the conditions as shown in Table 4.

The results are shown in Table 4.

Example 6

Example 5 was repeated except that $H_2$/butene-1 (molar ratio) was changed to those shown in Table 4. The results are shown in Table 4.

Example 7

Reference Example 3 was repeated except that diphenyldimethoxymethane was used in place of 1,8-cineole as the electron donating compound.

The results are shown in Table 4.

Table 3

| | | Example | | | Comparative Example | | | | | Example |
|---|---|---|---|---|---|---|---|---|---|---|
| | | 1 | 2 | 3 | 6 | 7 | 8 | 9 | 10 | 4 |
| Magnesium compound | kind | $Mg(OC_2H_5)_2$ | $Mg(OC_2H_5)_2$ | $Mg(OC_2H_5)_2$ | $Mg(OC_2H_5)_2$ | $Mg(OC_2H_5)_2$ | $Mg(OC_2H_5)_2$ | $Mg(OC_2H_5)_2$ | $Mg(OC_2H_5)_2$ | $Mg(OC_2H_5)_2$ |
| | Average particle size μm | 35 | 35 | 35 | 35 | 35 | 35 | 35 | 35 | 35 |
| | δg | 1.3 | 1.3 | 1.3 | 1.3 | 1.3 | 1.3 | 1.3 | 2.2 | 1.3 |
| Cℓ/Ti (molor ratio) | | 24 | 24 | 24 | 24 | 24 | 24 | 24 | 26 | 24 |
| Electron donating compound (ED) | | di-n-butyl phthalate | di-n-butyl phthalate | di-n-butyl phthalate | di-n-butyl phthalate | di-n-butyl phthalate | di-n-butyl phthalate | di-n-butyl phthalate | di-n-butyl phthalate | di-n-butyl phthalate |
| ED/Mg (molor ratio) | | 0.11 | 0.11 | 0.11 | 0.11 | 0.11 | 0.11 | 0.11 | 0.005 | 0.11 |
| Electron donor | | diphenyl-dimethoxy-methane | diphenyl-dimethoxy-methane | diphenyl-dimethoxy-methane | methyl toluylate | diphenyl-dimethylsilane | diphenyl-dimethoxy-methane | diphenyl-dimethoxy-methane | diphenyl-dimethoxy-methane | diphenyl-dimethoxy-methane |
| Polymerization temperature (°C) | | 55 | 55 | 55 | 55 | 55 | 55 | 55 | 55 | 55 |
| $H_2$/butene-1 (molar ratio) | | 0.005 | 0.03 | 0.05 | 0.05 | 0.005 | 0 | 0.5 | 0.03 | 0.03 |
| Propylene/butene-1 (molar ratio) | | — | — | — | — | — | — | — | — | 0.05 |
| Activity (kg PB/g-Ti) | | 160 | 200 | 220 | 28 | 26 | 40 | 40 | 40 | 200 |
| Intrinsic viscosity [η] | | 4.5 | 3.1 | 2.2 | 2.2 | 4.8 | 4.9 | 0.3 | 2.9 | 3.0 |
| I. I (%) | | 98 | 98 | 97 | 93 | 88 | 97 | 75 | 80 | — |
| Bulk density (g/cm³) | | 0.39 | 0.37 | 0.37 | 0.34 | 0.27 | 0.35 | 0.28 | 0.25 | 0.36 |
| Residual Ti (ppm) | | 7 | 5 | 5 | 36 | 38 | 25 | 30 | 30 | 6 |
| Residual Cℓ (ppm) | | 110 | 70 | 80 | 610 | 650 | 350 | 400 | 390 | 100 |
| Creep resistance | | 4500 | 4000 | 3300 | 1200 | 1100 | 5000 < | 100 > | 300 | — |

Table 4

| | | Example 5 | Example 6 | Example 7 |
|---|---|---|---|---|
| Magnesium compound | kind | $MgCl_2$ | $MgCl_2$ | Silica $Mg(OEt)_2$ |
| | Average particle size µm | 20 | 20 | 40 |
| | δg | 1.8 | 1.8 | 1.1 |
| Cl/Ti (molor ratio) | | 22 | 22 | 8.1 |
| Electron donating compound (ED) | | diisobutyl phthalate | diisobutyl phthalate | diisopropyl phthalate |
| ED/Mg (molor ratio) | | 0.09 | 0.09 | 0.1 |
| Electron donor | | diphenyl-dimethoxy-methane | diphenyl-dimethoxy-methane | diphenyl-dimethoxy-methane |
| Porimerization temperature (°C) | | 55 | 55 | 55 |
| $H_2$/butene-1 (molar ratio) | | 0.01 | 0.03 | 0.03 |
| Propylene/butene-1 (molar ratio) | | — | — | — |
| Activity (kg PB/g-Ti) | | 160 | 190 | 90 |
| Intrinsic viscosity [η] | | 4.0 | 3.1 | 3.5 |
| I.I (%) | | 96 | 96 | 98 |
| Bulk density (g/cm³) | | 0.36 | 0.38 | 0.38 |
| Residual Ti (ppm) | | 8 | 4 | 10 |
| Residual Cl (ppm) | | 100 | 70 | 60 |
| Creep resistance | | 4400 | 3600 | 4100 |

Example 8

(1) Preparation of solid catalyst component:

A solid catalyst component was obtained in the same manner as in Reference Example 1.

The average particle size of this solid catalyst component was 35 µm and the geometrical standard deviation (σg) of the particle size distribution was 1.3. The amount of titanium carried thereon was measured by colorimetry to find that 2.6% by weight of titanium was contained.

(2) Preparation of catalyst:

A catalyst was obtained in the same manner as in Reference Example 1 except that 3 mmols/liter of dicumyl peroxide was used in place of 12 mmols/liter of 1,8-cineole as the electron donating compound (C).

(3) Production of butene-1 homopolymer;

Into a fluidized bed type polymerizer of 300 mm in diameter and 100 liters in capacity were fed the catalyst obtained in the above (2) at a feeding rate of 0.3 mmol/hr in terms of Ti atom from the catalyst strorage tank and triisobutylaluminum at a flow rate of 60 mmols/hr and dicumyl peroxide at a flow rate of 6 mmols/hr.

The partial pressure of butene-1, that of nitrogen, the gas superficial velocity of butene-1, $N_2$ gas and $H_2$ gas, discharging of the polymer and the polymerization temperature were under the same conditions as in Reference Example 1.

The intrinsic viscosity [$\eta$], I.I., bulk density, residual titanium (fluorescent X-ray method), residual chlorine (fluorescent X-ray method) and creep resistance (according to ASTM D2990) of the resulting polymer are shown in Table 5.

Examples 9 and 10

Examaple 8 was repeated except that $H_2$/butene-1 (molar ratio) was changed to those as shown in Table 5.

The results are shown in Table 5.

Comparative Example 11

Example 8 was repeated except that 3.8 mmols/liter of methyl toluylate was used in place of dicumyl peroxide in (2) and methyl toluylate was fed at a flow rate of 7.5 mmols/hr in place of dicumyl peroxide in (3).

The results are shown in Table 5.

Comparative Example 12

Example 8 was repeated except that 1 mmol/liter of diphenyldimethoxysilane was used in place of dicumyl peroxide in (2) and diphenyldimethoxysilane was fed at a rate of 3 mmols/hr in place of dicumyl peroxide in (3).

The results are shown in Table 5.

Comparative Exampes 13 and 14

Example 8 was repeated except that $H_2$/butene-1 (molar ratio) was changed to those as shown in Table 5.

The results are shown in Table 5.

Comparative Example 15

Example 8 was repeated except that addition amount of di-n-butyl phthalate was changed to 7.6 g (0.028 mol) from 153 g (0.55 mol) in (1). The solid catalyst component contained 3.0% by weight of titanium.

The results are shown in Table 5.

Example 11

Example 8 was repeated except that a butene-1/propylene copolymer was produced by feeding butene-1, propylene, $N_2$ gas and $H_2$ gas at the rates as shown in Table 5.

The results are shown in Table 5.

Example 12

(1) Preparation of solid catalyst component:

Catalyst component was prepared in the same manner as in Reference Example 2.

(2) Preparation of catalyst:

Catalyst was prepared in the same manner as in Reference Example 1 (2) except that the conditions as shown in Table 6 were employed.

(3) Production of butene-1 homopolymer:

The homopolymer was produced in the same manner as in Reference Example 1 (3) except that the conditions as shown in Table 6 were employed.

The results are shown in Table 6.

Example 13

Example 12 was repeated except that $H_2$/butene-1 ratio was changed to those as shown in Table 6. The results are shown in Table 6.

Example 14

(1) Preparation of solid catalyst component:

The same solid catalyst component as in Reference Example 1 was obtained in the same manner as in Reference Example 1.

(2) Preparation of catalyst:

Catalyst was prepared in the same manner as in Reference Example 1 (2) except for the conditions shown in Table 6.

(3) Production of butene-1 homopolymer:

Homopolymer was produced in the same manner as in Reference Example 1 (3) except that the conditions shown in Table 6 were employed.

The results are shown in Table 6.

Table 5

| | | Example | | | Comparative Example | | | | | Example |
|---|---|---|---|---|---|---|---|---|---|---|
| | | 8 | 9 | 10 | 11 | 12 | 13 | 14 | 15 | 11 |
| Magnesium compound | kind | $Mg(OC_2H_5)_2$ | $Mg(OC_2H_5)_2$ | $Mg(OC_2H_5)_2$ | $Mg(OC_2H_5)_2$ | $Mg(OC_2H_5)_2$ | $Mg(OC_2H_5)_2$ | $Mg(OC_2H_5)_2$ | $Mg(OC_2H_5)_2$ | $Mg(OC_2H_5)_2$ |
| | Average particle size μm | 35 | 35 | 35 | 35 | 35 | 35 | 35 | 35 | 35 |
| | δ g | 1.3 | 1.3 | 1.3 | 1.3 | 1.3 | 1.3 | 1.3 | 2.2 | 1.3 |
| Cℓ/Ti (molor ratio) | | 24 | 24 | 24 | 24 | 24 | 24 | 24 | 26 | 24 |
| Electron donating compound (ED) | | di-n-butyl phthalate | di-n-butyl phthalate | di-n-butyl phthalate | di-n-butyl phthalate | di-n-butyl phthalate | di-n-butyl phthalate | di-n-butyl phthalate | di-n-butyl phthalate | di-n-butyl phthalate |
| ED/Mg (molor ratio) | | 0.11 | 0.11 | 0.11 | 0.11 | 0.11 | 0.11 | 0.11 | 0.005 | 0.11 |
| Electron donor | | dicumyl peroxide | dicumyl peroxide | dicumyl peroxide | methyl toluylate | diphenyl-dimethylsilane | dicumyl peroxide | dicumyl peroxide | dicumyl peroxide | dicumyl peroxide |
| Polymerization temperature (°C) | | 55 | 55 | 55 | 55 | 55 | 55 | 55 | 55 | 55 |
| $H_2$/butene-1 (molar ratio) | | 0.005 | 0.03 | 0.05 | 0.05 | 0.005 | 0 | 0.5 | 0.03 | 0.03 |
| Propylene/butene-1 (molar ratio) | | — | — | — | — | — | — | — | — | 0.05 |
| Activity (kg PB/g-Ti) | | 150 | 190 | 200 | 28 | 26 | 50 | 60 | 20 | 220 |
| Intrinsic viscosity [η] | | 5.0 | 3.5 | 2.6 | 2.2 | 4.8 | 5.5 | 0.4 | 3.0 | 3.7 |
| I. I (%) | | 98 | 96 | 96 | 93 | 88 | 95 | 71 | 78 | — |
| Bulk density (g/cm³) | | 0.37 | 0.37 | 0.36 | 0.34 | 0.27 | 0.33 | 0.28 | 0.26 | 0.34 |
| Residual Ti (ppm) | | 8 | 6 | 5 | 36 | 38 | 16 | 15 | 50 | 3 |
| Residual Cℓ (ppm) | | 120 | 100 | 100 | 610 | 650 | 300 | 230 | 700 | 70 |
| Creep resistance | | 4800 | 4000 | 3500 | 1200 | 1100 | 5000< | 100> | 500 | — |

Table 6

| | | Example 12 | Example 13 | Example 14 |
|---|---|---|---|---|
| Magnesium compound | kind | $MgCl_2$ | $MgCl_2$ | Silica $Mg(OEt)_2$ |
| | Average particle size μm | 20 | 20 | 40 |
| | δg | 1.8 | 1.8 | 1.1 |
| Cl/Ti (molor ratio) | | 22 | 22 | 8.1 |
| Electron donating compound (ED) | | diisobutyl phthalate | diisobutyl phthalate | diisopropyl phthalate |
| ED/Mg (molor ratio) | | 0.09 | 0.09 | 0.1 |
| Electron donor | | dicumyl peroxide | dicumyl peroxide | dicumyl peroxide |
| Porimerization temperature (°C) | | 55 | 55 | 55 |
| $H_2$/butene-1 (molar ratio) | | 0.01 | 0.03 | 0.03 |
| Propylene/butene-1 (molar ratio) | | — | — | — |
| Activity (kg PB/g-Ti) | | 150 | 180 | 110 |
| Intrinsic viscosity [η] | | 4.5 | 3.5 | 3.3 |
| I.I (%) | | 96 | 96 | 98 |
| Bulk density (g/cm³) | | 0.38 | 0.36 | 0.39 |
| Residual Ti (ppm) | | 6 | 4 | 7 |
| Residual Cl (ppm) | | 90 | 90 | 30 |
| Creep resistance | | 4500 | 3900 | 3700 |

## Claims

**1.** A process for producing polybutene-1 including a homopolymer of butene-1 and a copolymer of butene-1 with other α-olefins by a vapor phase polymerization at a temperature of 45-70°C in the presence of a catalyst comprising (A) a solid catalyst component obtained from a magnesium compound, an electron donating compound and a halide of tetravalent titanium, (B) an organoaluminum compound and (C) an electron donor, said electron donor (C) is at least one compound selected from the group consisting of an ether compound represented by the formula:

$$R^6{}_nC(OR^7)_{4-n}$$

wherein $R^6$ represents a saturated or unsaturated hydrocarbon group with the proviso that at least one of $nR^6$ is an aromatic hydrocarbon group or an alicyclic hydrocarbon group and $R^7$ represents a hydrocarbon group and n is 1-3, and an organic peroxide represented by the formula:

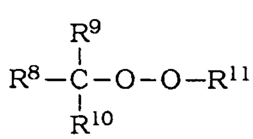

wherein $R^8$, $R^9$, $R^{10}$ and $R^{11}$ each represent a saturated or unsaturated hydrocarbon group, **characterized in that** said solid catalyst component (A) has an average particle size of 5-200 $\mu$m, a geometrical standard deviation ($\sigma$g) of the particle size distribution of less than 2.1 and a molar ratio of said electron donating compound/magnesium of 0.01 or more, and the vapor phase polymerization is carried out at a molar ratio of hydrogen/butene-1 of 0.001-0.1.

**2.** The process as claimed in claim 1, **characterized in that** the electron donor (C) is at least one compound selected from the group of diphenyldimethoxymethane and dicumyl peroxide.

**3.** The process as claimed in claim 1, **characterized in that** the magnesium compound is represented by the formula:

$MgX_2$

wherein X represents a halogen atom, a straight chain or branched chain aliphatic, alicyclic or aromatic alkoxy group of 1-10 carbon atoms which may be substituted with a hetero-atom or an aryloxy group which may be substituted with a hetero-atom and X may be identical or different.

**4.** The process as claimed in claim 3, **characterized in that** the magnesium compound is at least one compound selected from the group consisting of magnesium chloride and a lower alkoxymagnesium.

**5.** The process as claimed in claim 1, **characterized in that** the electron donating compound is at least one compound selected from the group consisting of an ester, an ether, a ketone and an acid anhydride.

**6.** The process as claimed in claim 5, **characterized in that** the electron donating compound is at least one compound selected from the group consisting of an alkyl ester of an aromatic carboxylic acid, an aromatic dicarboxylic acid, an aromatic ketone, an aromatic carboxylic acid anhydride and an ethylene glycol alkyl ether.

**7.** The process as claimed in claim 6, **characterized in that** the electron donating compound is at least one compound selected from the group consisting of diisopropyl phthalate and diisobutyl phthalate.

**8.** The process as claimed in claim 1, **characterized in that** the halide of tetravalent titanium is titanium tetrachloride.

**9.** The process as claimed in claim 1, **characterized in that** the organoaluminum compound (B) is represented by the formula:

$AlR^6{}_vX_{3-v}$ or $Al_2R^6{}_3X_3$

wherein $R^6$ represents an alkyl group of 1-10 carbon atoms, a cycloalkyl group or an aryl group, v represents a real number of 1-3 and X represents a halogen atom.

**10.** The process as claimed in claim 9, **characterized in that** the organoaluminum compound (B) is a trialkylaluminum.

**11.** The process as claimed in claim 10, **characterized in that** the trialkylaluminum is triisobutylaluminum.

**12.** The process as claimed in claim 1, **characterized in that** the catalyst has the composition that the organoaluminum compound (B) is in an amount of 0.1 - 1000 times the mol of the halide of tetravalent titanium in the solid catalyst component (A) and the electron donor (C) is in an amount of 0.1-500 times the mol of the halide of tetravalent titanium in the solid catalyst component (A); and the partial pressure of butene-1 is $9.8 \times 10^4$-$1.47 \times 10^6$ Pa (1-15 kg/cm$^2$).

**13.** The process as claimed in claim 1, **characterized in that** the $\alpha$-olefin is propylene.

**14.** The process as claimed in claim 1, **characterized in that** in a first stage, a homopolymerization of an $\alpha$-olefin other than butene-1 is carried out, and that in a second stage, the polymerization of butene-1 or copolymerization of butene-1 with other $\alpha$-olefin is carried out in the presence of the $\alpha$-olefin homopolymer obtained in the first stage.

## Patentansprüche

**1.** Verfahren zur Herstellung von Polybuten-1, einschließlich einem Homopolymer von Buten-1 und einem Copolymer von Buten-1 mit anderen $\alpha$-Olefinen,durch eine Dampfphasenpolymerisation bei einer Temperatur von 45 - 70 °C in Gegenwart eines Katalysators, umfassend (A) eine feste Katalysatorkomponente, erhalten aus einer Magnesiumverbindung, einer elektronenabgebenden Verbindung und einem Halogenid des vierwertigen Titans, (B) eine Organoaluminiumverbindung und (C) einen Elektronendonator, wobei der Elektronendonator (C) mindestens eine Verbindung ist, welche aus der aus einer Etherverbindung der Formel:

$R^6{}_nC(OR^7)_{4-n}$

worin $R^6$ eine gesättigte oder ungesättigte Kohlenwasserstoffgruppe bedeutet, mit der Maßgabe, daß mindestens eine von $nR^6$ eine aromatische Kohlenwasserstoffgruppe oder eine alicyclische Kohlenwasserstoffgruppe ist, und $R^7$ eine Kohlenwasserstoffgruppe bedeutet und n 1 - 3 ist, und einem organischen Peroxid der Formel:

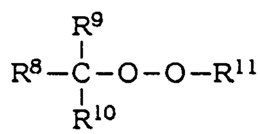

worin $R^8$, $R^9$, $R^{10}$ und $R^{11}$ jeweils eine gesättigte oder ungesättigte Kohlenwasserstoffgruppe bedeuten, bestehenden Gruppe gewählt ist, **dadurch gekennzeichnet,** daß die feste Katalysatorkomponente (A) eine durchschnittliche Teilchengröße von 5 - 200 $\mu$m, eine geometrische Standardabweichung ($\sigma$g) der Teilchengrößenverteilung von weniger als 2,1 und ein molares Verhältnis der elektronenabgebenden Verbindung/Magnesium von 0,01 oder mehr aufweist, und daß die Dampfphasenpolymerisation bei einem molaren Verhältnis von Wasserstoff/Buten-1 von 0,001 - 0,1 durchgeführt wird.

**2.** Verfahren nach Anspruch 1, **dadurch gekennzeichnet,** daß der Elektronendonator (C) mindestens eine aus der Gruppe Diphenyldimethoxymethan und Dicumylperoxid gewählte Verbindung ist.

**3.** Verfahren nach Anspruch 1, **dadurch gekennzeichnet,** daß die Magnesiumverbindung der Formel:

$MgX_2$

entspricht, worin X ein Halogenatom, eine geradkettige oder verzweigtkettige aliphatische, alicyclische oder aromatische Alkoxygruppe mit 1 - 10 Kohlenstoffatomen, welche durch ein Heteroatom substituiert sein kann oder eine Aryloxygruppe, welche durch ein Heteroatom substituiert sein kann, bedeutet und wobei X gleich oder verschieden sein kann.

**4.** Verfahren nach Anspruch 3, **dadurch gekennzeichnet,** daß die Magnesiumverbindung mindestens eine Verbindung ist, welche aus der aus Magnesiumchlorid und Niederalkoxymagnesium bestehenden Gruppe gewählt ist.

**5.** Verfahren nach Anspruch 1, **dadurch gekennzeichnet,** daß die elektronenabgebende Verbindung mindestens eine Verbindung ist, welche aus der aus einem Ester, einem Ether, einem Keton und einem Säureanhydrid bestehenden Gruppe gewählt ist.

**6.** Verfahren nach Anspruchs 5, **dadurch gekennzeichnet,** daß die elektronenabgebende Verbindung mindestens eine Verbindung ist, welche aus der aus einem Alkylester einer aromatischen Carbonsäure,

einer aromatischen Dicarbonsäure, einem aromatischen Keton, einem aromatischen Carbonsäureanhydrid und einem Ethylenglykolalkylether bestehenden Gruppe gewählt ist.

7. Verfahren nach Anspruch 6, **dadurch gekennzeichnet,** daß die elektronenabgebende Verbindung mindestens eine Verbindung ist, welche aus der aus Diisopropylphthalat und Diisobutylphthalat bestehenden Gruppe gewählt ist.

8. Verfahren nach Anspruch 1, **dadurch gekennzeichnet,** daß das Halogenid des vierwertigen Titans Titantetrachlorid ist.

9. Verfahren nach Anspruch 1, **dadurch gekennzeichnet,** daß die Organoaluminiumverbindung (B) der Formel:

$AlR^6{}_vX_{3-v}$ oder $Al_2R^6{}_3X_3$

entspricht, worin $R^6$ eine Alkylgruppe mit 1 - 10 Kohlenstoffatomen, Cycloalkylgruppe oder Arylgruppe bedeutet, v eine reelle Zahl von 1 - 3 bedeutet und X ein Halogenatom darstellt.

10. Verfahren nach Anspruch 9, **dadurch gekennzeichnet,** daß die Organoaluminiumverbindung (B) ein Trialkylaluminium ist.

11. Verfahren nach Anspruch 10, **dadurch gekennzeichnet,** daß das Trialkylaluminium Triisobutylaluminium ist.

12. Verfahren nach Anspruch 1, **dadurch gekennzeichnet,** daß der Katalysator eine solche Zusammensetzung aufweist, daß die Organoaluminiumverbindung (B) in einer Menge von dem 0,1 - 1000 molfachen des Halogenids des vierwertigen Titans in der festen Katalysatorkomponente (A) vorliegt und der Elektronendonator (C) in einer Menge von dem 0,1 - 500 molfachen des Halogenids des vierwertigen Titans in der festen Katalysatorkomponente (A) vorliegt; und daß der Partialdruck von Buten-1 $9{,}8 \times 10^4$ - $1{,}47 \times 10^6$ Pa (1 - 15kg/$cm^2$) beträgt.

13. Verfahren nach Anspruch 1, **dadurch gekennzeichnet,** daß das $\alpha$-Olefin Propylen ist.

14. Verfahren nach Anspruch 1, **dadurch gekennzeichnet,** daß in einer ersten Stufe eine Homopolymerisation eines von Buten-1 verschiedenen $\alpha$-Olefins durchgeführt wird, und daß in einer zweiten Stufe die Polymerisation von Buten-1 oder Copolymerisation von Buten-1 mit einem anderen $\alpha$-Olefin in Gegenwart des in der ersten Stufe erhaltenen $\alpha$-Olefin-Homopolymeren durchgeführt wird.

## Revendications

1. Procédé pour la production de polybutène-1 comprenant un homopolymère de butène-1 et un copolymère de butène-1 avec d'autres $\alpha$-oléfines, par polymérisation en phase vapeur à une température de 45 à 70 °C, en présence d'un catalyseur comprenant (A) un composant de catalyseur solide obtenu à partir d'un composé du magnésium, un composé donneur d'électrons et un halogénure de titane tétravalent, (B) un composé organoaluminique et (C) un donneur d'électrons, ledit donneur d'électrons (C) étant au moins un composé choisi dans le groupe constitué par un éther représenté par la formule :

$R^6{}_nC(OR^7)_{4-n}$

dans laquelle $R^6$ représente un groupe hydrocarboné saturé ou insaturé, sous réserve qu'au moins un des $nR^6$ soit un groupe hydrocarboné aromatique ou un groupe hydrocarboné alicyclique, et $R^7$ représente un groupe hydrocarboné et n vaut 1 à 3, et par un peroxyde organique représenté par la formule

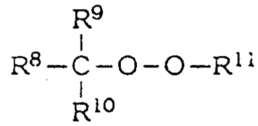

dans laquelle $R^8$, $R^9$, $R^{10}$ et $R^{11}$ représentent chacun un groupe hydrocarboné saturé ou insaturé, caractérisé en ce que ledit composant de catalyseur solide (A) a une granulométrie moyenne de 5 à 200 µm, un écart type géométrique ($\sigma g$) de la répartition granulométrique inférieur à 2,1 et un rapport molaire dudit composé donneur d'électrons/magnésium de 0,01 ou plus, et la polymérisation en phase vapeur est effectuée avec un rapport molaire hydrogène/butène-1 de 0,001 à 0,1.

**2.** Procédé selon la revendication 1, caractérisé en ce que le donneur d'électrons (C) est au moins un composé choisi dans le groupe du diphényldiméthoxyméthane et du peroxyde de dicumyle.

**3.** Procédé selon la revendication 1, caractérisé en ce que le composé du magnésium est représenté par la formule :

$MgX_2$

dans laquelle X représente un atome d'halogène, un groupe alcoxy aliphatique à chaîne droite ou ramifiée, alicyclique ou aromatique de 1 à 10 atomes de carbone, qui peut être substitué avec un hétéroatome ou un groupe aryloxy qui peut être substitué avec un hétéroatome et les symboles X peuvent être identiques ou différents.

**4.** Procédé selon la revendication 3, caractérisé en ce que le composé du magnésium est au moins un composé choisi dans le groupe constitué par le chlorure de magnésium et un alcoxymagnésium inférieur.

**5.** Procédé selon la revendication 1, caractérisé en ce que le composé donneur d'électrons est au moins un composé choisi dans le groupe constitué par un ester, un éther, une cétone et un anhydride d'acide.

**6.** Procédé selon la revendication 5, caractérisé en ce que le composé donneur d'électrons est au moins un composé choisi dans le groupe constitué par un ester alkylique d'un acide carboxylique aromatique, un acide dicarboxylique aromatique, une cétone aromatique, un anhydride d'acide carboxylique aromatique et un éther alkylique d'éthylèneglycol.

**7.** Procédé selon la revendication 6, caractérisé en ce que le composé donneur d'électrons est au moins un composé choisi dans le groupe constitué par le phtalate de diisopropyle et le phtalate de diisobutyle.

**8.** Procédé selon la revendication 1, caractérisé en ce que l'halogénure de titane tétravalent est le tétrachlorure de titane.

**9.** Procédé selon la revendication 1, caractérisé en ce que le composé organoaluminique (B) est représenté par la formule :

$AlR^6{}_vX_{3-v}$ ou $Al_2R^6{}_3X_3$

où $R^6$ représente un groupe alkyle de 1 à 10 atomes de carbone, un groupe cycloalkyle ou un groupe aryle, v représente un nombre réel de 1 à 3 et X représente un atome d'halogène.

**10.** Procédé selon la revendication 9, caractérisé en ce que le composé organoaluminique (B) est un trialkylaluminium.

**11.** Procédé selon la revendication 10, caractérisé en ce que le trialkylaluminium est le triisobutylaluminium.

12. Procédé selon la revendication 1, caractérisé en ce que le catalyseur a une composition telle que le composé organoaluminique (B) soit présent en une proportion de 0,1 à 1 000 fois les moles de l'halogénure de titane tétravalent dans le composant de catalyseur solide (A) et le donneur d'électrons (C) soit présent en une proportion de 0,1 à 500 fois les moles de l'halogénure de titane tétravalent dans le composant de catalyseur solide (A) ; et la pression partielle du butène-1 est de 9,8 x $10^4$ à 1,47 x $10^6$ Pa (1 à 15 kg/$cm^2$).

13. Procédé selon la revendication 1, caractérisé en ce que l'α-oléfine est le propylène.

14. Procédé selon la revendication 1, caractérisé en ce que, dans une première étape, on effectue une homopolymérisation d'une α-oléfine autre que le butène-1 et, dans une seconde étape, on effectue la polymérisation du butène-1 ou la copolymérisation du butène-1 avec une autre α-oléfine, en présence de l'homopolymère d'α-oléfine obtenu dans la première étape.